Europäisches Patentamt

European Patent Office

Office européen des brevets

(19)

(11) Publication number: **0 203 265**
**B1**

(12) **EUROPEAN PATENT SPECIFICATION**

(45) Date of publication of the patent specification:
**30.08.89**

(21) Application number: **86102011.3**

(22) Date of filing: **23.11.82**

(60) Publication number of the earlier application in accordance
with Art. 76 EPC: **0109465**

(51) Int. Cl.⁴: **B65D 35/02, B32B 27/00**

(54) Multiple layer flexible sheet structure for packaging, including tubes made from such structure.

(43) Date of publication of application:
**03.12.86 Bulletin 86/49**

(45) Publication of the grant of the patent:
**30.08.89 Bulletin 89/35**

(84) Designated Contracting States:
**AT BE CH DE FR GB IT LI LU NL SE**

(56) References cited:
**WO-A-82/00020**
**US-A- 4 363 841**
**US-A- 4 418 841**

(73) Proprietor: **AMERICAN NATIONAL CAN COMPANY,**
**8101 West Higgins Road, Chicago Illinois 60631(US)**

(72) Inventor: **Eckstein, John P., 1206 Glenayre Drive, Neenah Wisconsin(US)**

(74) Representative: **Holdcroft, James Gerald, Dr. et al,**
**Graham Watt & Co. Riverhead, Sevenoaks Kent**
**TN13 2BN(GB)**

## Description

This invention pertains to multiple layer flexible sheet structures, one use of which is in flexible tubes of the type commonly used for packaging paste type products. Thick metal foil as a single layer has long been used to hold and dispense paste products. However, metal tubes have definite shortcomings. Compared to other tube structures, metal tubes are very expensive, they dent easily and they tend to crack with only a moderate amount of flexing.

More recently, a large share of the tube market has been taken by flexible sheet materials having a multiplicity of polymeric layers. Typical tubes have an inner heat sealable layer, an outer heat sealable layer, and a barrier layer interposed therebetween. Additional layers may be used in order to provide other properties or qualities.

Layers of a non-polymeric nature may also be included in these sheet materials to provide specialized performance functions.

It is known, for example from WO-A 82/00020, to provide a layer of thin aluminium foil as a high quality barrier layer. When foil is used, it is common practice to use a highly adhesive polymer to adhere it to its adjacent layers in the structure.

It is also known to provide a layer of paper, which may provide dimensional stability, and also provide an aesthetically pleasing and aseptically clean appearing white background.

While known structures have experienced success in the market place, there has been a degree of failure with existing tube structures. Moreover, certain products are so hard to hold that no polymeric tube structure has hitherto been acceptable for packaging them.

A partucular problem of prior tubes is attributed to faiure of the tubes due to the chemical activity of a product held in tubes having an aluminium foil layer. The polymeric material between the foil and the product may develop small cracks known as stress cracks, occasioned or hastened by chemical attack by the product. Stress cracks then allow the product to penetrate the polymer and attack the foil, causing loss of adhesion between the foil and the adjoining layers.

Alternatively the product may attack the interfacial bond between polymer layers thus causing loss of adhesion between the polymer layers. In either case, failure of the respective bond results in premature failure of the tube.

In addressing the stress crack problem, it is known to use a thick layer of ethylene acrylic acid (EAA) as the product contacting surface. While EAA does have substantial stress crack resistance, it is relatively expensive, and it is highly desirable to find a cheaper replacement material. Further, small particles of EAA are rubbed off its surface by the processing equipment during tube processing. These particles, known as polydust, are sometimes picked up by tubes, and may even become entrapped in the tube. While materials used for contact with hygenic products are preferably acceptable for contact with the product, it is highly desired to avoid inclusion of any type of contamination into the product.

Thus it is desirable to find a material which has good stress crack resistance and also does not generate polydust in the processing equipment.

According to the invention, there is provided a multiple layer sheet structure having the layers firmly adhered to each other into a unitary structure, wherein the layers, taken in order, include

(a) a layer of linear low density polyethylene (LLDPE), which confers enhanced stress crack resistance on the structure;
(b) a first adhesive layer;
(c) a metal foil barrier layer;
(d) a second adhesive layer; and
(e) a polyethylene layer.

LLDPE is used collectively herein to refer to linear low density polyethylene, both homopolymers and copolymers, and should be interpreted as such throughout the specification.

In preferred structures, the LLDPE layer is 0.7 to 3.0 mils (0.018 to 0.076 mm) thick. The barrier, a foil, is 0.35 to 0.7 mil (0.009 to 0.018 mm) thick, and the polyethylene layer is 0.7 to 3 mils thick (0.018 to 0.076 mm). Additional layers may be bonded to the latter layer, namely a paper layer, a second polyethylene layer and an exterior layer bonded to the second polyethylene layer with good adhesion.

The sum of the thicknesses of the second polyethylene layer and the exterior layer combined is about 2.0 to 5.0 mils (0.051 to 0.13mm).

In a most preferred sheet structure, the LLDPE layer is 1.2 mils (0.030 mm ) thick, the foil is 0.35 mil (0.009 mm) thick and the sum of the thicknesses of the LLDPE layer and the first adhesive layer is 2.0 to 5.0 mils (0.051 to 0.13 mm).

The first and second adhesive layers are effective to join the foil to the polyehtylene and LLDPE layers respectively. In some embodiments the second adhesive layer and the first polyethylene layer contain ethylene methyl acrylate copolymer (EMA) as a blend component.

A flexible tube according to the invention is made of sheet material defined in claim 1, the tube having a first heat sealable polymer layer comprising the LLDPE layer as its interior surface and a second heat sealable polymer layer as its exterior surface.

In a most preferred tube according to the invention, the layer structure includes: an LLDPE layer 0.7 to 3.0 mils (0.018 to 0.076 mm) thick; the first adhesive layer, foil 0.35 to 0.7 mil (0.009 to 0.018 mm) thick; the second adhesive layer, the polyethylene layer, a paper layer; a third adhesive layer comprising a layer of polyethylene 0.7 to 2.0 mils (0.018 to 0.051 mm) thick, and the second heat sealable polymer layer.

The sum of thicknesses of the second heat sealable layer and the third adhesive layer, in the preferred structure is 2.0 to 5.0 mils (0.051 to 0.13 mm). Further, the sum of the thicknesses of the LLDPE layer and the first adhesive layer is likewise 2.0 to 5.0 mils (0.051 to 0.13 mm).

The invention will now be described in more detail by way of example only with reference to the accompanying drawings in which:

FIGURE 1 is a cross-section of a multiple layer sheet structure embodying this invention,

FIGURE 2 is a cross-section of a prior art sheet structure, and

FIGURE 3 is a partially cut-away view of a product-containing tube made from sheet structure according to this invention.

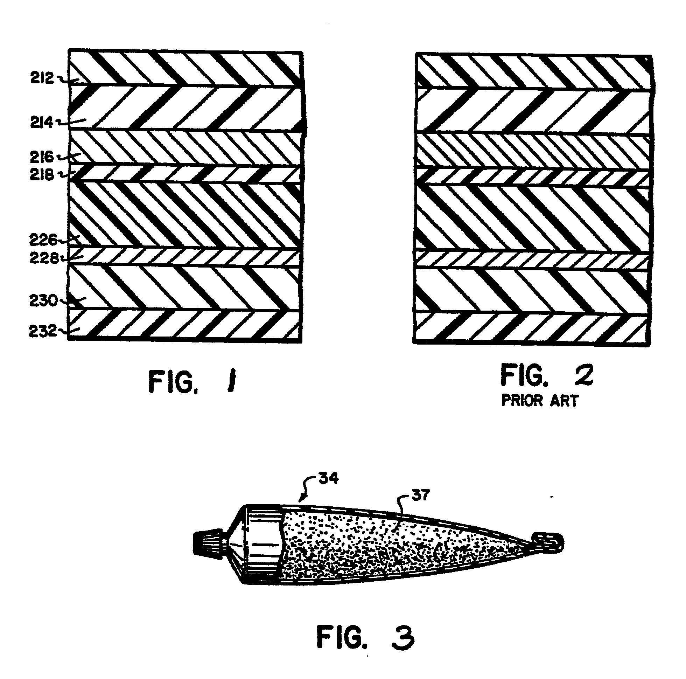

Fig. 1 shows the entire multiple layer sheet structure cross-section. Layers 212, 214 and 218 are low density polyethylene (LDPE). Layer 216 is paper. Layers 226 and 230 are ethylene acrylic acid (EAA). Layer 228 is a metal foil. Layer 232 is linear low density polyethylene (LLDPE).

Layer 214 is LDPE blended with a coloring pigment. The layer 218 is LDPE which, as will be seen later, is used here as an adhesive layer.

When the laminate is used to make a tube, layers 212 and 214 combined act as heat seal layers in forming a joint on the tube sidewall. The sidewall joint has a portion of the surface of layer 212 sealed against a portion of the surface of layer 232 to form a lap seal. Likewise, layer 230 is effectively used as a portion of the heat seal on that side of the sheet structure such that layers 230 and 232 co-act cooperatively, as necessary, to form the heat seal. Layer 232 will form the inside surface of the tube. Layer 230 also serves as a barrier between the foil layer 228 and the product 37 (FIGURE 5) to protect the foil from chemical attack by the product. Paper layer 216 serves thte known function of providing dimensional stability properties to the structure. The aluminium foil layer 228 serves as a barrier to transmission of gases, and to any light which may penetrate layers 214 and 216. The aluminium foil further serves, in combination with the paper layer 216, to provide dimensional stability to the structure.

Layers 218 and 226 can comprise 20% to 100% ethylene methyl acrylate copolymer (EMA). (While a 100% blend is pure EMA, it is intended to be included herein in the blend description).

Structures according to the invention, such as in FIGURE 1 may be easily formed into tubes, filled, and sealed on conventional equipment using conventional processes.

As noted above, layer 232 of FIGURE 1 is composed of LLDPE (linear low density polyethylene) rather than LDPE. This improvement concerns the protection of foil layer 228 and its adhesion at the interface with layer 230, and also protection of the interfacial adhesion between layers 230 and 232.

It is normal practice, such as in the prior art structure of FIGURE 2, to provide 2.0 mils (0.051 mm) of EAA and 1.2 mil (0.030 mm) LDPE. Such a structure is vulnerable to attack by certain chemical products which may be in the tubes, and fails to contain the product by failure known as stress cracking. This phenomenon occurs under phydical stress and in the presence of certain chemical products, when the LDPE layer forms minute cracks. These cracks allow the chemical product to effectively penetrate the LDPE layer, and may permeate through the EAA layer. Product permeation of the EAA layer facilitates attack of the inter-layer adhesion between the EAA and the foil. The typical result is loosening or weakening of the adhesion at the interface of the foil and EAA layers and, sometimes, visible corrosion of the foil layer. Once the adhesion is degraded, the unitary nature of the multiple layer structure is destroyed and the structure is unable to perform its function properly.

In an attempt to achieve improved stress crack resistance, the prior art has substituted EAA into layer 32 in place of the LDPE. This substitution has been partially successful, but at the substantially increased cost of additional expensive EAA. Functionally, however, the EAA surface is susceptible to scuffing, and thus must be handled very carefully, which is undersirable in commercial manufacturing operations. Surprisingly, the substitution of low-cost LLDPE for LDPE results in substantially improved stress crack resistance – to a level at least as good as EAA.

It should be appreciated that the outer layers of the tube, represented, for example in FIGURE 1 by layers 212 and 214, may be selected from those materials which are compatible with layers 230 and 232. Examples of acceptable materials are LDPE, LLDPE, EAA, EMA, medium density polyethylene (MDPE), high density polyethylene (HDPE) and ethylene vinyl acetate (EVA).

The following specific examples illustrate the invention further.

<u>Example 1</u>

Two mils (0.051 mm) of pigmented LDPE was extrusion coated onto 1.6 mils (0.041 mm) of paper. The presently uncoated surface of the paper was then extrusion coated using 0.7 mil (0.018 mm) LDPE, and the pigmented LDPE-coated surface of the paper was over-coated, by extrusion coating, with 1.5 mils (0.038 mm) LDPE. 0.7 mil (0.018 mm) aluminium foil was extrusion laminated to the 0.7 mil LDPE with 3.3 mils (0.084 mm) EAA. Finally 2.0 mils (0.051 mm) EAA and 1.2 mil (0.030 mm) LLDPE were coextrusion coated onto the exposed foil surface, with the EAA adjacent the foil. The resulting sheet structure was 13.0 mils (0.33 mm) thick.

The foregoing example, together with an example of the prior art, Prior Art A are tabulated below.

Example 1

| 1.5 mil | LDEP |
|---------|------|
| 2.0 mil | Pigmented LDPE |
| 1.6 mil | Paper |
| 0.7 mil | LDPE |
| 3.3 mil | EAA |
| 0.7 mil | Foil |
| 2.0 mil | EAA |
| 1.2 mil | LLDPE |
| 13.0 mil | Total |
| (0.33 mm) | |

Prior Art A

| 1.5 mil | LDEP |
|---------|------|
| 2.0 mil | Pigmented LDPE |
| 1.6 mil | Paper |
| 0.7 mil | LDPE |
| 3.3 mil | EAA |
| 0.7 mil | Foil |
| 2.0 mil | EAA |
| 1.2 mil | LDPE |
| 13.0 mil | Total |
| (0.33 mm) | |

In the above tabulation 1 mil = 0.0254 mm and the present description notes the metric equivalents of all the above imperial dimensions.

The sheet materials shown in the Examples 1 and A1 were made into dispensing tubes in known manner. That is, tubes were formed by forming a longitudinal lap seam by heat sealing techniques to form tubes 1–11/32 inches (3.4 cm) diameter. The tubes were then cut to length and heads were injection molded into one end, including the use of conventional inserts, and capped. The tubes were filled with product and the ends sealed. The filled tubes were then subjected to testing both immediately and after predetermined agings.

Stress Crack Tests

In evaluating stress crack resistance, experimental structures according to Example 1 were compared to the Prior Art A structure and to tubes made from the Prior Art structures B and C below.

Prior Art B

| 1.5 mil | LDEP |
|---------|------|
| 2.0 mil | Pigmented LDPE |
| 1.6 mil | Paper |
| 0.7 mil | LDPE |
| 3.3 mil | EAA |
| 0.7 mil | Foil |
| 3.2 mil | EAA |
| 13.0 mil | Total |

Prior Art C

| 1.5 mil | LDEP |
|---------|------|
| 2.0 mil | Pigmented LDPE |
| 1.6 mil | Paper |
| 0.7 mil | LDPE |
| 3.3 mil | EAA |
| 0.7 mil | Foil |
| 1.0 mil | EAA |
| 2.2 mil | EAA |
| 13.0 mil | Total |

In one stress crack test, tubes from Example 1 and Prior Art structure A were filled with mineral spirits. Duplicate sets of samples were stored in 2 trials at 120°F. and 140°F. (49 and 60°C). Stress crack failures appeared in the "A" tubes of both sets after 5 days, while the Example 1 tubes showed no failure after 1 month.

In another stress crack test of Example 1 and Structure "A", tubes were filled with toothpaste and stored at 120°F. (49°C). After one month, the tubes were squeezed to compare seal integrity. The prior art tubes failed at lower squeezing pressures than Example 1 tubes.

In still another stress crack test of Example 1 against Prior Art Structures A, B and C, tubes were filled with mineral spirits and stored flat. Duplicate sets of each variable were stored in two trials at 120°F. and 140°F. (49 and 60°C). Within one week stress cracks appeared in variables A and C. There were none in variable B or Example 1. The remaining samples were squeeze tested. Example 1 and variable C were judged equal. Variable B was better; variable A was the worst.

In a processing test, variable B and Example 1 were subjected to higher than normal down pressure on commercial side seaming equipment to demonstrate susceptibility to generation of polydust. Polymer dust did accumulate during running of variable B, indicating a polydust problem. No polydust was observed during the similar comparative running of Example 1 tubes.

From the above testing of Example 1 tubes against prior art variables it was concluded that the use of LLDPE as the sealant layer provides improved stress crack resistance over LDPE (variable A); its stress crack resistance is equal to EAA (variables B and C); and it is not susceptible to generation of polydust by processing equipment as is EAA (variable B trial).

Thus it is seen that the invention provides multiple layer sheet structures, and tubes made therefrom, having improved stress crack resistance over some prior art structures, and equivalent stress crack resistance and better resistance to generation of polydust than others.

## Claims

1. A multiple layer sheet structure having the layers firmly adhered to each other into a unitary structure, wherein the layers, taken in order include:
(a) a layer of linear low density polyethylene (LLDPE) which confers enhanced stress crack resistance on the structure;
(b) a first adhesive layer;
(c) a metal foil barrier layer;
(d) a second adhesive layer; and
(e) a polyethylene layer.

2. A structure according to claim 1, wherein the LLDPE layer is 0.7 to 3.0 mil (0.018 to 0.076 mm) thick.

3. A structure according to claim 1 or claim 2, wherein both said polyethylene layer and said LLDPE layer are 0.7 to 3.0 mils (0.018 to 0.076 mm) thick.

4. A structure according to claim 1, 2 or 3, wherein said barrier layer is metal foil 0.35 to 0.7 mil (0.009 to 0.018 mm) thick.

5. A structure according to claim 3 or claim 4, wherein said LLDPE layer is 1.2 mils (0.030 mm) thick.

6. A structure according to any of claims 1 to 5, wherein the second adhesive layer and the polyethylene layer each contain EMA (ethylene methyl acrylate) copolymer as a blend component.

7. A structure according to any of claims 1 to 6, wherein there are additional layers on the polyethylene layer, the additional layers comprising, in order a paper layer; a second polyethylene layer; and a second exterior layer, which is bonded to said second polyethylene layer with good adhesion.

8. A structure according to claim 7, wherein the LLDPE layer is 0.7 to 3.0 mils (0.018 to 0.076 mm) thick, said barrier layer is metal foil 0.35 to 0.7 mil (0.009 to 0.018 mm) thick, the polyethylene layer is 0.7 to 3.0 mils (0.018 to 0.076 mm) thick, and the sum of the thicknesses of the second polyethylene layer and the second exterior layer are 2.0 to 5.0 mils (0.051 to 0.13 mm) e.g. 3.5 mil (0.09 mm).

9. A structure according to any of claims 1 to 8, wherein the sum of the thicknesses of the LLDPE layer and the first adhesive layer is 2.0 to 5.0 mils (0.051 to 0.13 mm), e.g. 3.2 mil (0.08 mm).

10. A flexible dispensing tube having a tubular wall made from the structure according to any of claims 1 to 9, wherein the LLDPE layer forms the inner surface of the tube and a heat sealable polymer layer, of e.g. low density polyethylene, forms the outer surface of the tube.

11. A tube according to claim 10, wherein the tube has a side seam produced by heat seaming the inner and outer layers together.

12. A tube according to claim 10 or claim 11, wherein the second heat sealable layer is polyethylene, there is a layer of paper between the said polyethylene layer and the second heat sealable layer, and an additional polymeric layer between the paper layer and the second heat sealable layer.

## Patentansprüche

1. Mehrschichtige Bahnstruktur mit zu einer einheitlichen Struktur fest miteinander verbundenen Schichten, wobei die Schichten, der Reihe nach umfassen:
(a) eine Schicht aus linearem Polyethylen niederer Dichte (LLDPE), die der Struktur eine erhöhte Spannungsrißfestigkeit verleiht;
(b) eine erste Klebstoffschicht;
(c) eine Metallfoliensperrschicht;
(d) eine zweite Klebstoffschicht; und
(e) eine Polyethylenschicht.

2. Struktur nach Anspruch 1, bei der die LLDPE-Schicht 0,7 bis 3,0 Mil (0,018 bis 0,076 mm) dick ist.

3. Struktur nach Anspruch 1 oder 2, bei der sowohl die Polyethylenschicht als auch die LLDPE-Schicht 0,7 bis 3,0 Mil (0,018 bis 0,076 mm) dick ist.

4. Struktur nach Anspruch 1, 2 oder 3, bei der die Sperrschicht eine 0,35 bis 0,7 Mil (0,009 bis 0,018 mm) dicke Metallfolie ist.

5. Struktur nach Anspruch 3 oder Anspruch 4, bei der die LLDPE-Schicht 1,2 Mil (0,030 mm) dick ist.

6. Struktur nach einem der Ansprüche 1 bis 5, bei der die zweite Klebstoffschicht und die Polyethylenschicht jeweils ein EMA-(Ethylenmethylacrylat)-Colpolymer als Mischungskomponente enthalten.

7. Struktur nach einem der Ansprüche 1 bis 6, bei der sich zusätzliche Schichten auf der Polyethylenschicht befinden, wobei die zusätzlichen Schichten der Reihe nach eine Papierschicht, eine zweite Polyethylenschicht und eine zweite äußere Schicht umfassen, die mit der zweiten Polyethylenschicht mit guter Haftung verbunden ist.

8. Struktur nach Anspruch 7, bei der die LLDPE-Schicht 0,7 bis 3,0 Mil (0,018 bis 0,076 mm) dick ist, die Sperrschicht eine 0,35 bis 0,7 Mil (0,009 bis 0,018 mm) dicke Metallfolie ist, die Polyethylenschicht 0,7 bis 3,0 Mil (0,018 bis 0,076 mm) dick ist und die Summe der Dicken der zweiten Polyethylenschicht und der zweiten Außenschicht 2,0 bis 5,0 Mil (0,051 bis 0,13 mm), z.B. 3,5 Mil (0,09 mm), beträgt.

9. Struktur nach einem der Ansprüche 1 bis 8, bei der die Summe der Dicken der LLDPE-Schicht und der ersten Klebstoffschicht 2,0 bis 5,0 Mil (0,051 bis 0,13 mm) z.B. 3,2 Mil (0,08 mm) beträgt.

10. Flexible Spendertube mit einer aus der Struktur nach einem der Ansprüche 1 bis 9 hergestellten rohrförmigen Wandung, bei der die LLDPE-Schicht die innere Oberfläche der Tube bildet und eine heißsiegelfähige Polymerschicht aus z.B. Polyethylen niederer Dichte die äußere Oberfläche der Tube bildet.

11. Tube nach Anspruch 10, bei der die Tube eine Seitennaht aufweist, die durch Heißversiegeln der inneren und der Außenschicht miteinander gebildet ist.

12. Tube nach Anspruch 10 oder Anspruch 11, bei der die zweite heißsiegelfähige Schicht Polyethylen ist sowie eine Papierschicht zwischen der Polyethylenschicht und der zweiten heißsiegelfähigen Schicht und eine zusätzliche Polymerschicht zwischen der Papierschicht und der zweiten heißsiegelfähigen Schicht vorhanden ist.

**Revendications**

1. Structure en feuille multicouches dont les couches adhèrent solidement les unes aux autres en formant une structure unitaire, dans laquelle les couches comprennent dans l'ordre:
   (a) une couche de polyéthylène linéaire basse densité (LLDPE) qui donne à la structure une résistance accrue au fendillement par contrainte;
   (b) une première couche adhésive;
   (c) une couche barrière en feuille métallique;
   (d) une seconde couche adhésive; et
   (e) une couche de polyéthylène.

2. Structure selon la revendication 1, dans laquelle la couche de LLDPE a une épaisseur de 0,018 à 0,076 mm (0,7 à 3,0 mils).

3. Structure selon la revendication 1 ou 2, dans laquelle la couche de polyéthylène et la couche de LLDPE ont toutes deux une épaisseur de 0,018 à 0,076 mm (0,7 à 3,0 mils).

4. Structure selon l'une quelconque des revendications 1 à 3, dans laquelle ladite couche barrière est une feuille métallique de 0,009 à 0,018 mm (0,35 à 0,7 mil) d'épaisseur.

5. Structure selon la revendication 3 ou 4, dans laquelle ladite couche de LLDPE a une épaisseur de 0,030 mm (1,2 mil).

6. Structure selon l'une quelconque des revendications 1 à 5, dans laquelle la seconde couche adhésive et la couche de polyéthylène contiennent chacune un copolymère EMA (éthylène/acrylate de méthyle) en tant que composant de mélange.

7. Structure selon l'une quelconque des revendications 1 à 6, dans laquelle il est prévu des couches supplémentaires sur la couche de polyéthylène, ces couches supplémentaires comprenant dans l'ordre une couche de papier, une seconde couche de polyéthylène et une seconde couche extérieure qui est unie à cette seconde couche de polyéthylène avec une bonne adhérence.

8. Structure selon la revendication 7, dans laquelle la couche de LLDPE a une épaisseur de 0,018 à 0,076 mm (0,7 à 3,0 mils), la couche barrière est une feuille métallique de 0,009 à 0,018 mm (0,35 à 0,7 mil) d'épaisseur, la couche de polyéthylène a une épaisseur de 0,018 à 0,076 mm (0,7 à 3,0 mils), et la somme des épaisseurs de la seconde couche de polyéthylène et de la seconde couche extérieure est de 0,051 à 0,013 mm (2,0 à 5,0 mils), par exemple de 0,09 mm (3,5 mils).

9. Structure selon l'une quelconque des revendications 1 à 8, dans laquelle la somme des épaisseurs de la couche de LLDPE et de la première couche adhésive est de 0,051 à 0,013 mm (2,0 à 5,0 mils), par exemple de 0,08 mm (3,2 mils).

10. Tube distributeur flexible comprenant une paroi tubulaire faite de la structure selon l'une quelconque des revendications 1 à 9, dans lequel la couche de LLDPE constitue la surface intérieure du tube et une couche de polymère thermosoudable, par exemple de polyéthylène basse densité, constitue la surface extérieure du tube.

11. Tube selon la revendication 10, comportant une soudure latérale produite par thermosoudage des couches intérieure et extérieure.

12. Tube selon la revendication 10 ou 11, dans lequel la seconde couche thermosoudable est en polyéthylène, il est prévu une couche de papier entre ladite couche de polyéthylène et la seconde couche thermosoudable, et une couche supplémentaire de polymère est interposée entre la couche de papier et la seconde couche thermosoudable.

212
214
216
218
226
228
230
232

FIG. 1

FIG. 2

PRIOR ART

34

37

FIG. 3